# EUROPEAN PATENT SPECIFICATION

(11) **EP 3 795 313 B1**
(45) Date of publication and mention of the grant of the patent: **19.10.2022**
(21) Application number: 20196403.8
(22) Date of filing: 16.09.2020
(51) Int. Cl.: B27B 5/06, B23Q 17/00, B23D 59/00

(54) **METHOD FOR CUTTING PANELS AND MACHINE FOR CARRYING OUT THIS METHOD**
VERFAHREN ZUM SCHNEIDEN VON PLATTEN UND MASCHINE ZUR DURCHFÜHRUNG DIESES VERFAHRENS
PROCÉDÉ DE DÉCOUPE DE PANNEAUX ET MACHINE POUR LA MISE EN OEUVRE DE CE PROCÉDÉ

(30) Priority: 23.09.2019 IT 201900017018
(43) Date of publication of application: 24.03.2021
(73) Proprietor: SCM Group S.p.A., 47921 Rimini (RN) (IT)
(72) Inventor: GALLO, Gianluca, 47921 RIMINI (RN) (IT)
(74) Representative: Tiburzi, Andrea

(56) References cited:
- EP-B1- 2 090 394
- AU-A1- 2010 251 162
- US-A- 4 763 703
- US-A- 5 490 665

## Description

The present invention relates to a method for cutting panels according to the preamble of claim 1, and to a machine for carrying out such a method, according to the preamble of claim 7.

More specifically, the invention relates to a machine of the above type, studied and realized in particular to allow sequential cuts of panels made of wood, plastic, fiberglass, aluminum, and the like, more safely and more efficiently.

In the following, the description will address the application of the method at issue in machines equipped with programs for the sequential cutting of wooden panels by means of circular saws, but it is clear that it should not be considered limited to this specific use.

As is well known, there are currently in the market cutting machines for the sequential cutting of wooden panels by operators.

Said machines generally comprise a support plane, for supporting a workpiece to be cut, having a slot, and a circular cutting blade, rotating and arranged in said slot to generally cut through wooden panels.

The support plane comprises a fixed half-plane and a movable half-plane, also called carriage, which is movable along a direction parallel to said fixed half-plane.

The cutting machines according to the prior art also comprise one or more stop bars and abutments, slidably movable along said stop bars, adapted to allow, together with said stop bar, the correct positioning of the workpiece to be machined.

The machine may comprise a system for measuring the position of the abutments to allow precise positioning of these abutments.

In particular, magnetic rods can be included on the stop bar, and respective sensors on each abutment, which allow determining the absolute or relative position of the same abutments.

Said abutments can also be equipped with an LCD display that indicates its position along the stop bar, with respect to an origin or reference.

Said slot, and therefore said blade, is interposed between said fixed half-plane and said movable half-plane.

The cutting machines according to the prior art also comprise display means, which generally consist of a display, arranged so as to be visible to the user when performing the cutting activities, and a programmable central control unit, generally configured and programmed to determine an optimization and a cutting sequence to be displayed on said display means.

More specifically, generally said central control unit installs suitable applications, which include a cutting optimizer program and a cutting sequencer program, for use, in fact, on woodworking machines equipped with a circular saw (e.g. circular saws, saws-spindle molders, universal combined).

Starting from the possible choice between various optimized lists, made with the internal optimizer or a commercial office optimizer, the sequencer guides step by step the operator through the cutting of the panels, indicating the settings to be set on the circular saw and the way to perform each cut, according to the selected preferences.

Typically, the program has two main features:
- a cutting optimizer which, starting from the panel magazine and the list of pieces to be obtained (cutting list), generates a cutting scheme optimized for that specific panel magazine;
- a cutting sequencer (or navigator) which, starting from the optimized cutting scheme, generates the instructions for carrying out cuts by the circular blade.

By means of the programs or applications installed in said central control unit, the calculations are therefore carried out on how to cut the panel into different parts, in an optimized way, i.e. minimizing the waste of material, and determined how to perform the sequence of cuts, so as to minimize the operations and to increase the overall efficiency.

In providing the cutting sequence, the display also indicates where to arrange the abutments along the stop bar, providing suitable measurements with respect to the stop bar along which said abutments are slidingly arranged.

The different cutting sequences of the workpiece to be machined and the positioning of the abutments along the stop bar are thus shown on the display of the cutting machine so that the user can arrange the panels in a suitable way, and move said movable half-plane, by passing said panel along the cutting line and allowing the panel to be cut into two parts.

Then, the display shows how to perform a new cutting operation.

A method for cutting panels according to the preamble of claim 1, and a cutting machine according to the preamble of claim 7 are known from EP 2 090 394 B1, from the same applicant.

A technical problem of the machines according to the prior art is that if the user makes a mistake in positioning the abutment with respect to what it is indicated on the display of the cutting machine while executing a sequence of cuts, he would risk nullifying the cutting optimization.

Furthermore, the user could also potentially take security risks.

It is evident that this procedure is expensive in economic terms and in safety terms for the operator.

In light of the above, it is therefore an object of the present invention to propose a cutting machine and an improved method for cutting panels capable of avoiding or limiting the risk of incorrectly positioning the panel on the worktop.

It is therefore specific object of the present invention a method for cutting panels, such as panels made of wood, plastic, fiberglass, aluminum and the like, by means of a cutting machine, wherein said cutting machine comprises at least one stop bar and positioning means, movable along said at least one stop bar, wherein said method comprises the steps of: A. obtaining from said panel a plurality of parts and providing a graphical display of said panel broken down into said plurality of parts and B. displaying a sequence of operations indicating how to manage said panel for cutting it by means of a cutting machine in said plurality of parts, wherein said sequence of operations comprise the positioning indication of said positioning means on said at least one stop bar, wherein said method is characterized by C. providing a warning signal when said positioning means are positioned on said stop bars according to the indication provided on said step B while executing of at least one cutting operation of said panel.

Advantageously, said warning signal may be an audio signal and/or an optical signal.

Advantageously, said method may further comprise the step of blocking said at least one cutting operation of said panel, in case of said positioning means are positioned on said stop bars, differently from said positioning indication provided in said step B.

Advantageously, said cutting machine may comprise a display and in that said optical signal is displayed by said display.

Advantageously, said positioning means may comprise one or more abutment slidingly coupled with said at least one stop bar.

Advantageously, said one or more abutment may comprise transceiver means, for transmitting the position detected with respect to said at least one stop bar, and in that said cutting machine can comprise a central control unit, configured for receiving said detected position with respect to said at least one stop bar from said one or more abutment and providing said warning signal when said abutment are positioned on said stop bars before the execution of at least one cutting operation of said panel.

It is further object of the present invention a cutting machine for cutting panels comprising at least one supporting plane for supporting a panel intended to be cut, a circular blade for cutting said panel, mounted on said supporting plane, at least one stop bar for positioning said panel on said supporting plane, positioning means arranged on said at least one stop bar, for allowing the positioning of said panel with respect to said at least one stop bar, and a central control unit, configured for obtaining a plurality of parts from said panel and providing a graphical display of said panel broken down into said plurality of parts and displaying a sequence of operation for indicating how to manage said panel for cutting it into said plurality of parts by means of said cutting machine, wherein said sequence of operations comprises the positioning indication of said positioning means on said at least one stop bar characterized in that said positioning means are operatively connected to said central control unit for transmitting data related to their own position on said stop bars, and in that said central control unit is configured for providing a warning signal when said positioning means are positioned on said stop bars according to the indication of said sequence of operations, before the execution of at least one cutting operation of said panel.

Advantageously, said positioning means comprise one or more abutment, each one slidingly coupled with said at least one stop bar, said central control unit may comprise transceiver means for the operating connection with said abutment, and each one of said abutment comprise transceiver means, for transmitting its own position to said central control unit with respect to said stop bar with which is coupled.

Advantageously, said at least one stop bar may comprise at least one track, and said one or more abutment comprise a slide, slidingly engaged with said track of said at least one stop bar, and fixing members, for fixing said slide to said track.

Advantageously, each one of said abutment may comprise an LCD display, by means of which an operator can see the position of the abutment with respect to the stop bar on which is slidigly coupled.

Further advantageously, said supporting plane comprises a fixed half-plane and a movable half-plane, movable in parallel with said fixed half-plane, wherein a slit is provided between said fixed half-plane and said movable half-plane, and said machine may comprise a circular cutting blade, arranged in said slit, for cutting said panel.

Always advantageously, said machine may comprise blocking means, connected to said central control unit, wherein said blocking means are configured for moving from a rest position to an operating position, wherein they block the movement of said movable half-plane when the position of at least one of said abutment with respect to said stop bar on which it is slidingly coupled, is different from the respective position shown from said central control unit on said display.

Still advantageously, said machine may comprise two stop bars.

It is also object of the present invention a computer program comprising instructions which, when the program is executed by a computer, cause the computer to execute steps A, B and C of the method as defined above.

It is further object of the present invention a computer readable storage medium comprising instructions which, when executed by a computer, cause the computer to execute the steps of the method as defined above.

The present invention will be now described, for illustrative but not limitative purposes, according to its preferred embodiments, with particular reference to the figures of the enclosed drawings, wherein:
figure 1 shows a top view of a cutting machine according to the present invention;
figure 2 shows a wireless connection diagram of a central control unit of the cutting machine according to figure one with a plurality of movable stops;
figure 3 shows electronic stops installed on a stop bar;
figure 4 shows an example of a panel divided into parts to be cut in an optimized manner;
figure 5 shows a display of a cutting machine showing in particular the panel divided into parts to be cut in an optimized way;
figure 6 shows the display of a cutting machine, in which the position of the stops are in particular shown;
figure 7 shows a first example of a cutting of a panel;
figure 8 shows a second example of a cutting of a panel; and
figure 9 shows a third example of a cutting of a panel.

In the various figures, similar parts will be indicated by the same reference numbers.

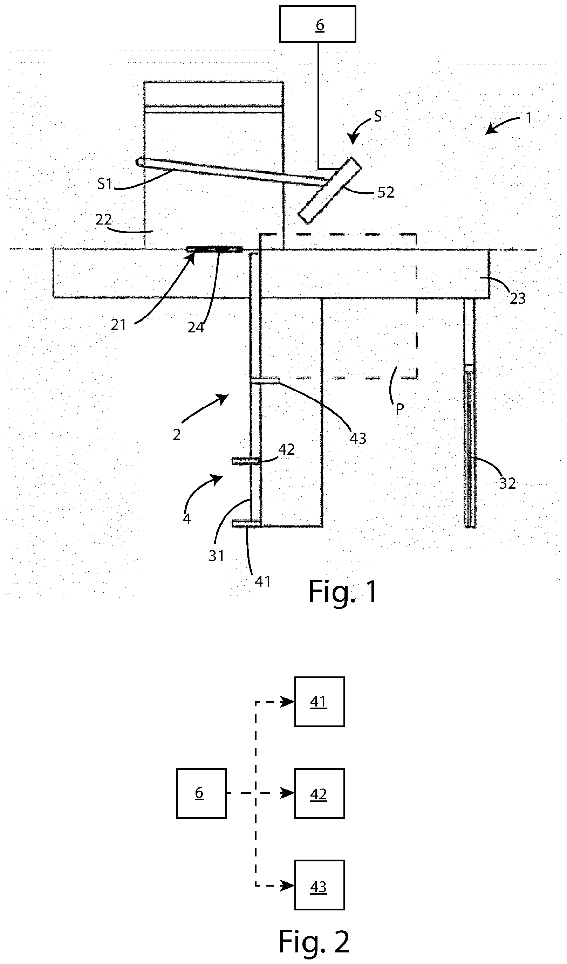

With reference to figure 1, a top view of a cutting machine 1 according to the present invention can be seen.

In particular, it is noted that the cutting machine 1 comprises a supporting plane 2, for supporting a panel P to be cut, having a slit 21, and a circular cutting blade 24, possibly movable arranged through said slit 21, and rotating to cut through said wooden panel P.

The supporting plane 2 comprises a fixed half-plane 22 and a movable half-plane or carriage 23, which is movable along the direction indicated by the double arrowhead A, parallel to the fixed half-plane 22, so as to remain adjacent to it.

The cutting machine 1 comprises, also, one or more stop bars, indicated with the reference numbers 31 and 32, arranged parallel to each other and perpendicular to said movable half-plane 23.

Said stop bars 31 and 32 can be independently rotated with respect to axes normal to the supporting plane 2, to allow the execution of inclined cuts of said panel P (not shown in the figure).

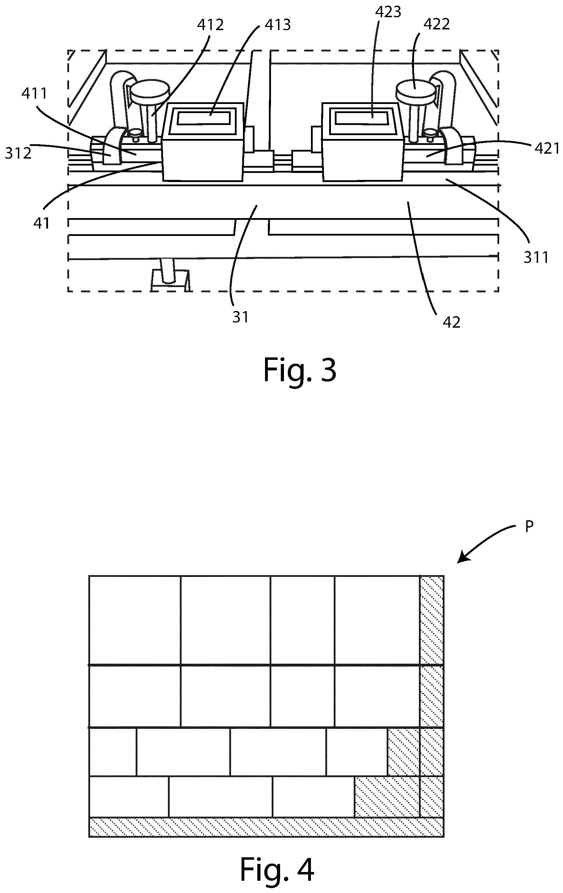

Furthermore, said stop bars 31 and 32 in the present embodiment each comprises a possibly graduated magnetic rod 311 (see figure 3), which function will be better explained below.

Finally, each of said stop bars also has a track, indicated on the stop bar with reference number 312, which operation will be better explained below.

Movable positioning means 4 are slidingly arranged on at least one of said stop bars 31 or 32, to allow positioning of the panel P to be machined on the stop bar 31 or 32 and on the supporting plane 2.

Said abutment means 4 comprise one or more abutments 41, 42, and 43, adapted to allow, as mentioned, together with said stop bars 31 and 32, the correct positioning of the panel P to be worked on the supporting plane 2 before of its cutting by means of the circular cutting blade 24.

Said abutments 41, 42, and 43, shown in detail also in figure 3, can be motorized.

In addition, said abutments 41, 42, and 43 each comprise a slide, indicated respectively with the reference numbers (see figure 2) 411 or 421 for the abutments 41 and 42, slidingly engaged with said track 312 of said stop bar 31, and fixing members, constituted in particular by a knob 412 or 422 referring respectively to said abutments 41 and 42. Each knob 412 and 422 is suitably employed and screwed into a housing (not shown in the figures) of the respective slide 411 or 421, such that, when screwed, they engage by tightening with said track 312 of the stop bar 31, to block in position the abutment 41 or 42 respectively.

Furthermore, each of said stops shown in figure 3, indicated as said by the numeral references 41 and 42, also include a respective LCD display 413 and 423 respectively, by means of which the operator can view the position of the abutments 41 or 42 with respect to the magnetic rod 311, reading the reached measurement.

More specifically, when the operator moves one of said abutments 41, 42, and 43 along the stop bar, on which it is slidably engaged, for example, the stop bar 31, he can easily read the position on the display on the LCD 413, generally measured in centimeters, along the stop bar 31.

Each of said bars 41, 42, and 43 also includes appropriate members (not shown in the figure) capable of interacting with the magnetic rod 311 of the stop bar 31, for example, to detect the respective position along with the same.

Said abutments 41, 42, and 43 also comprise transceiver means, for example by Bluetooth protocol and the like, for the transmission and reception of data as will be better explained below.

Said cutting machine 1 also comprises a display unit 5 comprising a support rod 51 and a viewer or display 52 fixed to said support rod 51. By means of said support rod, the display 52 can be moved and positioned for the convenience of the operator.

Finally, said cutting machine 1 also comprises a central control unit 6, operatively connected to said display 52 as well as to said abutments 41, 42, and 43, by means of suitable transceiving means, for example through Bluetooth protocol or the like.

In this way, said abutments 41, 42, and 43 are able to receive data from said central control unit 6, to allow the operator positioning the abutments 41, 42, and 43 along the stop bars 31 and/or 32, and transmitting to the same central control unit 6 the position data in real-time, such as to be detected as feedback, and such that said central control unit 6 can provide a feedback of the correct positioning on the liquid crystal display, which said abutments 41, 42, and 43 (see figure 2) are equipped with.

Said central control unit 6 is also programmed so as to execute appropriate programs and carry out optimized cuts and provide the operator with the best sequence, to optimize the cutting operations of the panel P.

Such applications or programs are designed, on the one hand, to minimize the waste of material or of panel P, and, on the other hand, to increase the speed with which the operator can carry out the different cutting operations.

The operation of the cutting machine 1 described above is as follows.

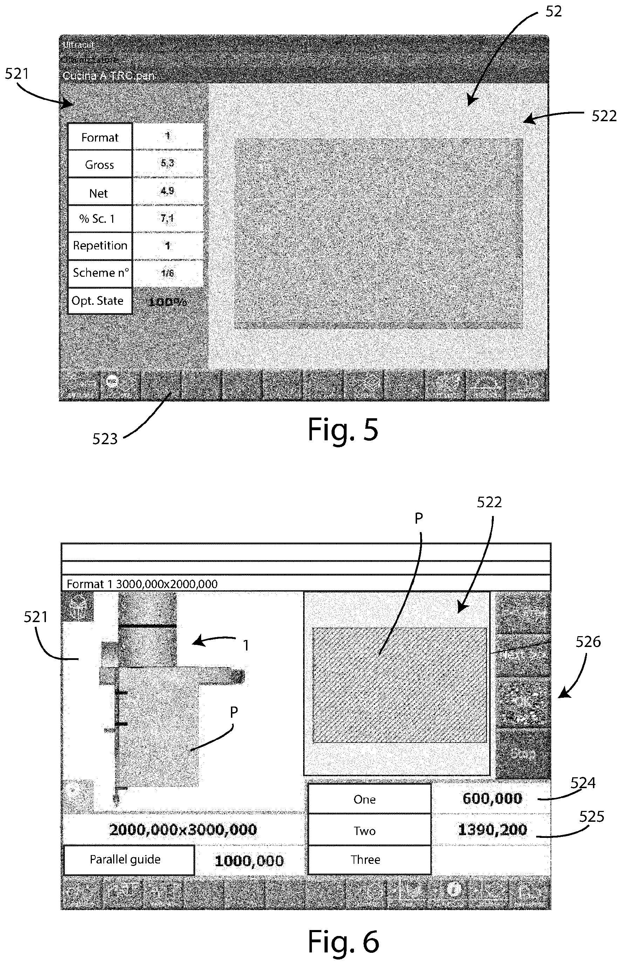

When an operator has to cut a panel P, the measurements or dimensions of the panel P itself are entered in the central control unit 6, together with the cutting specifications. Subsequently, on the display 52 of said cutting machine 1, the panel P with the cutting optimizations is shown as illustrated by way of example in figures 4 and 5.

In this way, the user can verify how the central control unit 6, by means of the optimization program, can reduce the waste to a minimum.

Moreover, the central control unit 6 is able, as mentioned, to calculate, by means of a program known as "sequencer" the best cuts sequence to minimize the number of cuts by the operator to be made for getting the cut parts of the panel P.

In particular, as can be seen in figure 5, on the screen of the display 52 various information is shown for the operator such as, on a first area 521 of the display 52 on the left, various information relating to the measurements of the panel P, on a second larger area 522 on the right of the display 52 it is shown a representation of the panel P with the various cut lines calculated and possibly suitably numbered, and finally on a lower area 523, various digital buttons for carrying out appropriate operations.

Generally, in any case, indications are provided for the graphic part such as:
- cut list: table format with navigation bar below;
- cutting optimizer;
- sequencer: 3D rendering graphics of the circular blade 24, similar to a simulator, with functional groups in motion;
- quote viewer: view one or more generic cuts for cuts;
- cut button;
- toolbar.

When the operator starts the cutting of a panel, in order to follow the suggestions of the program sequencer, indications are provided on the display 52, on how to arrange the abutments 41, 42, or 43 along the stop bars 31 or 32.

When, for example, the operator arranges the abutment 41 along with the respective stop bar 31 in the position indicated by the central control unit on the display 52, said measure is shown on the display 413 of the abutment 41. Once the requested position has been reached, the operator has only to tighten the knob 412 to fix in position said abutment 41. At the same time, the abutment 41, by means of the transceiver means, which it is equipped with, transmits its position to the central control unit 6 and, once reached the requested position, the central control unit 6 indicates to the operator, as informative feedback, that the position of the abutment 41 has been reached and is correct.

In this way, the operator can arrange the panel P on the support surface 2, placing it in abutment on the stop bars 31 or 32 and in abutment on used the abutments 41, 42, and 43.

The warning from said central control unit 6 can be both acoustic, for example by means of a buzzer or the like, and optical, for example, by means of a warning light, which switches on directly on the display 52 or by means of optical means such as LEDs and the like.

In particular, referring to figure 6, it can be seen that in the first area 521 of the display 52, the arrangement of the panel P to be cut on the cutting machine 1 is schematically shown, while in the second area 522, on the right side of the display 52, there is shown the panel P, the positions of the two bars shown in the screen portions 524 and 525, and indicators 526, adapted to indicate whether the correct position of the abutment has been reached or not.

In other words, by means of the transceiving connection between the abutments 41, 42, and 43 and the central control unit 6 of the cutting machine 6, as well as the capability of the same to detect its position with respect to the stop bar 31 or 32, on which they are slidingly arranged, it is possible, for example by means of the display 52 or other communication means to the operator, to transmit feedback on the correct position of said stops 41, 42, and 43 themselves, thus limiting the risk that cutting of the panel P does not comply with what it is indicated and suggested by the optimization program and by the sequencer.

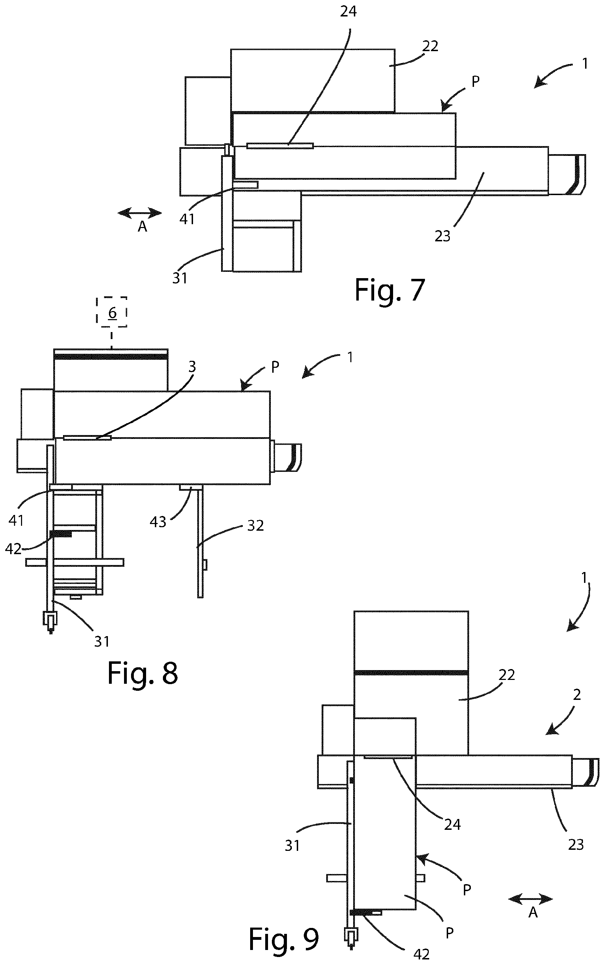

Subsequently, referring for example to figure 7, the user can cut the panel P by moving the movable half-plane 23 and passing it over the circular cutting blade 24, obviously cutting the panel into two parts, in which in particular the upper part remains on the fixed half-plane 22, while the lower part cut by the cutting blade 24, remains on the movable half-plane 23.

For the execution of a new cut, for example, the one shown in figure 8, the central control unit 6 will show on the display 52 the positioning of the two abutments 41 and 43, which are movable respectively on the respective stop bars 31 and 32.

Also in this case, once the abutments 41 and 43 are positioned and fixed on the respective stop bar 31 or 32, each of them transmits to the central control unit 6 its position with respect to the respective stop bar, as detected with respect magnetic rod 311 of each stop bar 31 or 32, to said central control unit 6, which will provide operational and functional feedback to the operator, informing him that the abutments 41 and 43 used are actually in the correct position (or not) before cutting the panel P using the cutting blade 24.

Figure 9 shows a further example of cutting optimized, in which it is used only the abutment 42 positioned along the stop bar 31.

In this case, the panel P is vertically arranged with respect to the supporting plane 2 (with respect to the figure shown).

The panel P is moved by means of the movable half-plane 23 after having been positioned in abutment on the stop bar 31 and on the abutment 42. Said abutment 42 is positioned with respect to said stop bar 31 by the operator using the display 423, which it is equipped with, on which it is possible to detect the position of the same abutment 42 with respect to the stop bar 31.

The operator can thus move the abutment 42 before fixing it, until it reaches the required position that the central control unit 6 will have previously shown on the display 52.

Subsequently, it will be the stop 42 to transmit its position to the central control unit 6, so that said central control unit 6 itself will be able to provide audible or visual feedback to the operator that the abutment 42 has been correctly positioned.

Only at this point, the operator will be able to move the movable half-plane 23 and perform the cutting operation of the panel by means of the circular cutting blade 24.

Advantageously, in a further embodiment, if the operator positions the abutments 41, 42, and 43 along with the 31 and/or 32 stop bars in a position different with respect to the respective position required by the central control unit 6, and shown by the same control unit 6 on the display 52, the movable half-plane 23 will be in the blocked position.

Therefore, in this case, the operator will be not allowed to move said half-plane 23 and carry out, then, the cutting operation of the panel P.

More in detail, in said further embodiment, the cutting machine 1 comprises blocking means (not shown in the figures) such as, for example, one or more braking members or mechanisms, capable of assuming a rest position, in which they allow the operator moving said movable half-plane 23, and an operative position, in which they do not allow the operator moving said movable half-plane 23, so as to block it.

In particular, said blocking means assume said rest position if the abutments 41, 42, and 43 are actually arranged by the operator in the correct position, namely in the position indicated by the central control unit 6.

On the other hand, in case of incorrect positioning by the operator of said abutments 41, 42, and 43, with respect to the position indicated by the central control unit 6, said blocking means assume said operative position, not allowing the operator to move said movable half-plane 23.

An advantage of the present invention is to limit and reduce the risk of making incorrect or unexpected cuts from the cutting plan of the panel by the operator, possibly therefore not in accordance with what is detected and calculated by the sequencer program, so as to limit any waste and also maximize the safety for the operator himself.

The present invention has been described for illustrative but not limitative purposes, according to its preferred embodiments, but it is to be understood that modifications and/or changes can be introduced by those skilled in the art within the scope of the claims.

## Claims

1. Method for cutting panels (P), such as panels made of wood, plastic, fiberglass, aluminum and the like, by means of a cutting machine (1), wherein said cutting machine (1) comprises at least one stop bar (31, 32) and positioning means (4), movable along said at least one stop bar (31, 32), wherein said method comprises the steps of:
A. obtaining from said panel (P) a plurality of parts and providing a graphical display of said panel (P) broken down into said plurality of parts and
B. displaying a sequence of operations indicating how to manage said panel (P) for cutting it by means of a cutting machine (1) in said plurality of parts, wherein said sequence of operations comprise the positioning indication of said positioning means (4) on said at least one stop bar (31, 32),
wherein said method is **characterized by**
C. providing a warning signal when said positioning means (4) are positioned on said stop bars (31, 32) according to the indication provided on said step B while executing of at least one cutting operation of said panel (P).

2. Method according to the preceding claim, **characterized in that** said warning signal is an audio signal and/or an optical signal.

3. Method according to any one of the preceding claims, **characterized in that** it further comprises the step of blocking said at least one cutting operation of said panel (P), in case of said positioning means (4) are positioned on said stop bars (31, 32), differently from said positioning indication provided in said step B.

4. Method according to the preceding claim **characterized in that** said cutting machine (1) comprises a display (52) and **in that** said optical signal is displayed by said display (52).

5. Method according to any one of the preceding claims, **characterized in that** said positioning means (4) comprise one or more abutment (41, 42, 43) slidingly coupled with said at least one stop bar (31, 32).

6. Method according to the preceding claim, **characterized**
**in that** said one or more abutment (41, 42, 43) comprise transceiver means, for transmitting the position detected with respect to said at least one stop bar (31, 32), and
**in that** said cutting machine (1) can comprise a central control unit (6), configured for receiving said detected position with respect to said at least one stop bar (31, 32) from said one or more abutment (41, 42, 43) and providing said warning signal when said abutment (41, 42, 43) are positioned on said stop bars(31, 32) before the execution of at least one cutting operation of said panel (P).

7. Cutting machine (1) for cutting panels (P) comprising
at least one supporting plane (2) for supporting a panel (P) intended to be cut,
a circular blade (24) for cutting said panel (P), mounted on said supporting plane (2),
at least one stop bar (31, 32) for positioning said panel (P) on said supporting plane (2),
positioning means (4) arranged on said at least one stop bar (31, 32), for allowing the positioning of said panel (P) with respect to said at least one stop bar (31, 32), and
a central control unit (6), configured for obtaining a plurality of parts from said panel (P) and providing a graphical display of said panel (P) broken down into said plurality of parts and displaying a sequence of operation for indicating how to manage said panel (P) for cutting it into said plurality of parts by means of said cutting machine (1), wherein said sequence of operations comprises the positioning indication of said positioning means (4) on said at least one stop bar (31, 32)
**characterized**
**in that** said positioning means (4) are operatively connected to said central control unit (6) for transmitting data related to their own position on said stop bars (31, 32), and
**in that** said central control unit (6) is configured for providing a warning signal when said positioning means (4) are positioned on said stop bars (31, 32) according to the indication of said sequence of operations, before the execution of at least one cutting operation of said panel (P).

8. Machine (1) according to the preceding claim **characterized**
**in that** said positioning means (4) comprise one or more abutment (41, 42, 43), each one slidingly coupled with said at least one stop bar (31, 32),
**in that** said central control unit (6) comprises transceiver means for the operating connection with said abutment (41, 42,43), and
**in that** each one of said abutment (41, 42,43) comprise transceiver means, for transmitting its own position to said central control unit (6) with respect to said stop bar (31,32) with which is coupled.

9. Machine (1) according to the preceding claim **characterized**
**in that** said at least one stop bar (31, 32) comprises at least one track (312), and
**in that** said one or more abutment (41, 42, 43) comprise
a slide (411, 421), slidingly engaged with said track (312) of said at least one stop bar (31), and
fixing members (412, 422), for fixing said slide (411,421) to said track (312).

10. Machine (1) according to any one of claims 8 or 9, **characterized in that** each one of said abutment (41, 42, 43) comprises an LCD display (413, 423), by means of which an operator can see the position of the abutment (41, 42, 43) with respect to the stop bar (31, 32) on which is slidigly coupled.

11. Machine (1) according to any one of claims 7-10, **characterized**
**in that** said supporting plane (2) comprises
a fixed half-plane (22) and
a movable half-plane (23), movable in parallel with said fixed half-plane (22),
wherein a slit is provided (21) between said fixed half-plane (22) and said movable half-plane (23), and
**in that** it comprises a circular cutting blade (24), arranged in said slit (21), for cutting said panel (P).

12. Machine (1) according to the preceding claim, **characterized**
**in that** it comprises blocking means, connected to said central control unit (6), wherein said blocking means are configured for moving from a rest position to an operating position, wherein they block the movement of said movable half-plane (23) when the position of at least one of said abutment (41,42,43) with respect to said stop bar (31,32) on which it is slidingly coupled, is different from the respective position shown from said central control unit (6) on said display (52).

13. Machine (1) according to the preceding claim, **characterized in that** it comprises two stop bars (31, 32).

14. Computer program comprising instructions which, when the program is executed by a computer, cause the computer to execute steps A, B and C of the method according to any one of claims 1-6.

15. A computer readable storage medium comprising instructions which, when executed by a computer, cause the computer to execute the steps of the method according to any one of claims 1-6.

## Patentansprüche

1. Verfahren zum Schneiden von Paneelen (P), wie beispielsweise Paneelen aus Holz, Kunststoff, Glasfaser, Aluminium und dergleichen, mittels einer Schneidemaschine (1), wobei die Schneidemaschine (1) mindestens eine Anschlagstange (31, 32) und Positioniermittel (4) umfasst, die entlang der mindestens einen Anschlagstange (31, 32) bewegbar sind, wobei das Verfahren die folgenden Schritte umfasst:
A. Erhalten einer Vielzahl von Teilen der Platte (P) und Bereitstellen einer grafischen Anzeige der in die Vielzahl von Teilen aufgegliederten Platte (P) und
B. Anzeigen einer Abfolge von Vorgängen, die angibt, wie die Platte (P) zu bearbeiten ist, um sie mittels einer Schneidemaschine (1) in die Vielzahl von Teilen zu schneiden, wobei die Verfahrensabfolge die Positionierungsanzeige der Positionierungsmittel (4) an der mindestens einen Anschlagleiste (31, 32) umfasst, wobei das Verfahren **gekennzeichnet ist durch**
C. Erzeugen eines Warnsignals, wenn die Positionierungsmittel (4) auf den Anschlagstangen (31, 32) gemäß der in Schritt B gemachten Angabe positioniert sind, während mindestens ein Schneidvorgang der Platte (P) ausgeführt wird.

2. Verfahren nach dem vorhergehenden Anspruch, **dadurch gekennzeichnet, dass** das Warnsignal ein Audiosignal und/oder ein optisches Signal ist.

3. Verfahren nach einem der vorhergehenden Ansprüche, **dadurch gekennzeichnet, dass** es außerdem den Schritt des Blockierens des mindestens einen Schneidvorgangs der Platte (P) umfasst, falls die Positionierungsmittel (4) auf den Anschlagstangen (31, 32) anders als die im Schritt B gelieferte Positionierungsangabe positioniert sind.

4. Verfahren nach dem vorhergehenden Anspruch, **dadurch gekennzeichnet, dass** die Schneidemaschine (1) eine Anzeige (52) umfasst und dass das optische Signal von der Anzeige (52) angezeigt wird.

5. Verfahren nach einem der vorhergehenden Ansprüche, **dadurch gekennzeichnet, dass** die Positioniermittel (4) einen oder mehrere Anschläge (41, 42, 43) umfassen, die beweglich mit der mindestens einen Anschlagstange (31, 32) gekoppel sind.

6. Verfahren nach dem vorhergehenden Anspruch, **dadurch gekennzeichnet, dass** das eine oder die mehreren Anschläge (41, 42, 43) Sende-/Empfangsmittel umfassen, um die in Bezug auf die mindestens eine Anschlagleiste (31, 32) erfasste Position zu übermitteln, und
dass die Schneidemaschine (1) eine zentrale Steuereinheit (6) umfassen kann, die so konfiguriert ist, dass sie die erfasste Position in Bezug auf die mindestens eine Anschlagleiste (31, 32) von dem einen oder den mehreren Anschlägen (41, 42, 43) empfängt und das Warnsignal bereitstellt, wenn die Anschläge (41, 42, 43) auf den Anschlagleisten (31, 32) positioniert sind, bevor mindestens ein Schneidevorgang der Platte (P) ausgeführt wird.

7. Schneidemaschine (1) for zum Schneiden von Platten (P), die Folgendes umfasst:
mindestens eine Stützebene (2) zum Stützen einer Platte (P), die geschnitten werden soll,
ein kreisförmiges Messer (24) zum Schneiden der genannten Platte (P), das auf der genannten Auflageebene (2) montiert ist,
mindestens eine Anschlagleiste (31, 32) zur Positionierung der Platte (P) auf der Auflageebene (2), Positionierungsmittel (4), die an der mindestens einen Anschlagleiste (31, 32) angeordnet sind, um die Positionierung der Platte (P) in Bezug auf die mindestens eine Anschlagleiste (31, 32) zu ermöglichen, und eine zentrale Steuereinheit (6), die konfiguriert ist, um eine Vielzahl von Teilen von der Platte (P) zu erhalten und eine grafische Anzeige der in die Vielzahl von Teilen zerlegten Platte (P) bereitzustellen und eine Betriebssequenz anzuzeigen, um anzugeben, wie die Platte (P) zu bearbeiten ist, um sie mittels der Schneidemaschine (1) in die Vielzahl von Teilen zu schneiden, wobei die Betriebssequenz die Positionierungsanzeige der
Positionierungsmittel (4) an der genannten mindestens einen Anschlagleiste (31, 32) umfasst,
**dadurch gekennzeichnet,**
**dass** die genannten Positionierungsmittel (4) betriebsmäßig mit der genannten zentralen Steuereinheit (6) verbunden sind, um Daten zu übertragen, die sich auf ihre eigene Position auf den genannten Anschlagstangen (31, 32) beziehen, und
**dass** die genannte zentrale Steuereinheit (6) so konfiguriert ist, dass sie ein Warnsignal abgibt, wenn die genannten Positioniermittel (4) auf den genannten Anschlagstangen (31, 32) entsprechend der Angabe der genannten Arbeitsfolge positioniert werden, vor der Ausführung mindestens eines Schneidvorgangs der genannten Platte (P).

8. Maschine (1) nach dem vorhergehenden Anspruch, **dadurch gekennzeichnet, dass** die Positioniermittel (4) einen oder mehrere Anschläge (41, 42, 43) umfassen, von denen jeder beweglich mit der mindestens einen Anschlagstange (31, 32) gekoppelt ist,
dass die zentrale Steuereinheit (6) Sender-Empfangsmittel für die Betriebsverbindung mit dem Anschlägen (41, 42, 43) umfasst, und
dass jeder der Anschläge (41, 42, 43) Sender-Empfänger-Mittel umfasst, um seine eigene Position an die zentrale Steuereinheit (6) in Bezug auf die Anschlagstange (31, 32) zu übertragen, mit der er gekoppelt ist.

9. Maschine (1) nach dem vorhergehenden Anspruch, **dadurch gekennzeichnet, dass** die mindestens eine Anschlagleiste (31, 32) mindestens eine Spur (312) aufweist, und dadurch, dass der eine oder die mehreren Anschläge (41, 42, 43) Folgendes umfassen:
einen Schieber (411, 421), der beweglich mit der Spur (312) der mindestens einen Anschlagleiste (31) in Eingriff steht, und
Befestigungselemente (412, 422), um den Schlitten (411, 421) an der Schiene (312) zu befestigen.

10. Maschine (1) nach einem der Ansprüche 8 oder 9, **dadurch gekennzeichnet, dass** jeder der Anschläge (41, 42, 43) eine LCD-Anzeige (413, 423) umfasst, mittels derer ein Bediener die Position des Anschlags (41, 42, 43) in Bezug auf die Anschlagleiste (31, 32) sehen kann, an die er beweglich gekoppelt ist.

11. Maschine (1) nach einem der Ansprüche 7-10, **dadurch gekennzeichnet, dass** die Stützebene (2) Folgendes umfasst:
eine feste Halbebene (22) und
eine bewegliche Halbebene (23), die parallel zu der festen Halbebene (22) beweglich ist,
wobei ein Schlitz (21) zwischen der festen Halbebene (22) und der beweglichen Halbebene (23) vorgesehen ist, und
dass sie eine kreisförmige Schneidklinge (24) umfasst, die in dem Schlitz (21) angeordnet ist, um die Platte (P) zu schneiden.

12. Maschine (1) nach dem vorhergehenden Anspruch, **dadurch gekennzeichnet, dass** sie Blockiermittel umfasst, die mit der zentralen Steuereinheit (6) verbunden sind, wobei die Blockiermittel so konfiguriert sind, dass sie sich von einer Ruheposition in eine Betriebsposition bewegen, wobei sie die Bewegung der beweglichen Halbebene (23) blockieren, wenn die Position mindestens einen der Anschläge (41, 42, 43) in Bezug auf die Anschlagstange (31, 32), an die sie beweglich gekoppelt ist, sich von der jeweiligen Position unterscheidet, die von der zentralen Steuereinheit (6) auf der Anzeige (52) angezeigt wird.

13. Maschine (1) nach dem vorhergehenden Anspruch, **dadurch gekennzeichnet, dass** sie zwei Anschlagleisten (31, 32) aufweist.

14. Computerprogramm mit Anweisungen, die, wenn das Programm von einem Computer ausgeführt wird, den Computer veranlassen, die Schritte A, B und C des Verfahrens nach einem der Ansprüche 1 bis 6 auszuführen.

15. Computerlesbares Speichermedium mit Befehlen, die, wenn sie von einem Computer ausgeführt werden, den Computer veranlassen, die Schritte des Verfahrens nach einem der Ansprüche 1 bis 6 auszuführen.

## Revendications

1. Procédé de découpe de panneaux (P), tels que des panneaux en bois, en plastique, en fibre de verre, en aluminium et similaires, au moyen d'une machine de découpe (1), dans lequel ladite machine de découpe (1) comprend au moins une barre d'arrêt (31, 32) et des moyens de positionnement (4), mobiles le long de ladite au moins une barre d'arrêt (31, 32), dans lequel ledit procédé comprend les étapes consistant à:
A. obtenir dudit panneau (P) une pluralité de parties et fournir un affichage graphique dudit panneau (P) décomposé en ladite pluralité de parties
et
B. afficher une séquence d'opérations indiquant comment gérer ledit panneau (P) pour le découper au moyen d'une machine de découpe (1) en ladite pluralité de parties, dans lequel ladite séquence d'opérations comprend l'indication de positionnement desdits moyens de positionnement (4) sur ladite au moins une barre d'arrêt (31, 32), dans lequel ledit procédé est **caractérisé par**
C. la fourniture d'un signal d'avertissement lorsque lesdits moyens de positionnement (4) sont positionnés sur lesdites barres d'arrêt (31, 32) selon l'indication fournie à ladite étape B tout en exécutant au moins une opération de découpe dudit panneau (P).

2. Procédé selon la revendication précédente, **caractérisé en ce que** ledit signal d'alerte est un signal audio et/ou un signal optique.

3. Procédé selon l'une quelconque des revendications précédentes, **caractérisé en ce qu'**il comprend en outre l'étape consistant à bloquer ladite au moins une opération de découpe dudit panneau (P), dans le cas où lesdits moyens de positionnement (4) sont positionnés sur lesdites barres d'arrêt (31, 32), différemment de ladite indication de positionnement fournie dans ladite étape B.

4. Procédé selon la revendication précédente, **caractérisé en ce que** ladite machine de découpe (1) comprend un affichage (52) et **en ce que** ledit signal optique est affiché par ledit affichage (52).

5. Procédé selon l'une quelconque des revendications précédentes, **caractérisé en ce que** lesdits moyens de positionnement (4) comprennent une ou plusieurs butées (41, 42, 43) couplées de manière coulissante avec ladite au moins une barre d'arrêt (31, 32).

6. Procédé selon la revendication précédente, **caractérisé en ce que** ladite une ou plusieurs butées (41, 42, 43) comprennent des moyens d'émission-réception, pour transmettre la position détectée par rapport à ladite au moins une barre d'arrêt (31, 32), et
**en ce que** ladite machine de découpe (1) peut comprendre une unité de commande centrale (6), configurée pour recevoir ladite position détectée par rapport à ladite au moins une barre d'arrêt (31, 32) depuis ladite une ou plusieurs butées (41, 42, 43) et fournir ledit signal d'avertissement lorsque lesdites butées (41, 42, 43) sont positionnées sur lesdites barres d'arrêt (31, 32) avant l'exécution d'au moins une opération de découpe dudit panneau (P).

7. Machine de découpe (1) pour découper des panneaux (P) comprenant:
au moins un plan de support (2) pour supporter un panneau (P) destiné à être découpé,
une lame circulaire (24) pour découper ledit panneau (P), montée sur ledit plan de support (2),
au moins une barre d'arrêt (31, 32) pour positionner ledit panneau (P) sur ledit plan de support (2),
des moyens de positionnement (4) disposés sur ladite au moins une barre d'arrêt (31, 32), pour permettre le positionnement dudit panneau (P) par rapport à ladite au moins une barre d'arrêt (31, 32), et une unité de commande centrale (6), configurée pour obtenir une pluralité de pièces à partir dudit panneau (P) et fournir un affichage graphique dudit panneau (P) décomposé en ladite pluralité de pièces et afficher une séquence d'opérations pour indiquer comment gérer ledit panneau (P) pour le couper en ladite pluralité de pièces au moyen de ladite machine de découpe (1), dans laquelle ladite séquence d'opérations comprend l'indication de positionnement desdits moyens de positionnement (4) sur ladite au moins une barre d'arrêt (31, 32)
**caractérisé**
**en ce que** lesdits moyens de positionnement (4) sont connectés de manière opérationnelle à ladite unité de commande centrale (6) pour transmettre des données relatives à leur propre position sur lesdites barres d'arrêt (31, 32), et
**en ce que** ladite unité de commande centrale (6) est configurée pour fournir un signal d'avertissement lorsque lesdits moyens de positionnement (4) sont positionnés sur lesdites barres d'arrêt (31, 32) selon l'indication de ladite séquence d'opérations, avant l'exécution d'au moins une opération de découpe dudit panneau (P).

8. Machine (1) selon la revendication précédente **caractérisée en ce que** lesdits moyens de positionnement (4) comprennent une ou plusieurs butées (41, 42, 43), chacune étant couplée de manière coulissante avec ladite au moins une barre d'arrêt (31, 32),
**en ce que** ladite unité de commande centrale (6) comprend des moyens émetteurs-récepteurs pour la connexion opérationnelle avec ladite butée (41, 42, 43), et
**en ce que** chacune desdites butées (41, 42, 43) comprend des moyens émetteurs-récepteurs pour transmettre sa propre position à ladite unité de commande centrale (6) par rapport à ladite barre d'arrêt (31, 32) à laquelle elle est couplée.

9. Machine (1) selon la revendication précédente, **caractérisée en ce que** ladite au moins une barre d'arrêt (31, 32) comprend au moins une piste (312), et **en ce que** ladite ou lesdites butées (41, 42, 43) comprennent
un coulisseau (411, 421), engagé de manière coulissante avec ladite piste (312) de ladite au moins une barre d'arrêt (31), et
des éléments de fixation (412, 422), pour fixer ledit coulisseau (411, 421) à ladite piste (312).

10. Machine (1) selon l'une quelconque des revendications 8 ou 9, **caractérisée en ce que** chacune desdites butées (41, 42, 43) comprend un affichage LCD (413, 423), au moyen duquel un opérateur peut voir la position de la butée (41, 42, 43) par rapport à la barre d'arrêt (31, 32) sur laquelle elle est couplée de manière coulissante.

11. Machine (1) selon l'une quelconque des revendications 7-10, **caractérisée en ce que** ledit plan de support (2) comprend
un demi-plan fixe (22) et
un demi-plan mobile (23), mobile en parallèle avec ledit demi-plan fixe (22),
dans lequel une fente est prévue (21) entre ledit demi-plan fixe (22) et ledit demi-plan mobile (23), et
**en ce qu'**il comprend une lame de découpe circulaire (24), disposée dans ladite fente (21), pour découper ledit panneau (P).

12. Machine (1) selon la revendication précédente, **caractérisée en ce qu'**elle comprend des moyens de blocage, reliés à ladite unité de commande centrale (6), dans laquelle lesdits moyens de blocage sont configurés pour se déplacer d'une position de repos à une position de fonctionnement, dans laquelle ils bloquent le mouvement dudit demi-plan mobile (23) lorsque la position d'au moins une desdites butées (41, 42, 43) par rapport à ladite barre d'arrêt (31, 32) sur laquelle elle est couplée de manière coulissante, est différente de la position respective montrée par ladite unité de commande centrale (6) sur ledit affichage (52) .

13. Machine (1) selon la revendication précédente, **caractérisée en ce qu'**elle comprend deux barres d'arrêt (31, 32).

14. Programme informatique comprenant des instructions qui, lorsque le programme est exécuté par un ordinateur, amènent l'ordinateur à exécuter les étapes A, B et C du procédé selon l'une quelconque des revendications 1 à 6.

15. Support de stockage lisible par ordinateur comprenant des instructions qui, lorsqu'elles sont exécutées par un ordinateur, amènent l'ordinateur à exécuter les étapes du procédé selon l'une quelconque des revendications 1 à 6.
